# FASCICULE DE BREVET EUROPEEN

(11) **EP 0 628 732 B1**
(45) Date de publication et mention de la délivrance du brevet: **23.04.1997**
(21) Numéro de dépôt: 94401265.7
(22) Date de dépôt: 07.06.1994
(51) Int. Cl.: F15B 15/19, B60R 22/46, B60R 22/18

(54) **Actionneur à déclenchement pyrotechnique**
Betätigungsvorrichtung mit pyrotechnischer Auslösung
Actuator with pyrotechnical release

(30) Priorité: 09.06.1993 FR 9306947
(43) Date de publication de la demande: 14.12.1994
(73) Titulaire: ECIA - EQUIPEMENTS ET COMPOSANTS POUR L'INDUSTRIE AUTOMOBILE, F-25400 Audincourt (FR)
(72) Inventeur: Passebecq, Ghislan, F-25400 Audincourt (FR); Hoblingre, André, F-25700 Valentigney (FR)
(74) Mandataire: Habasque, Etienne Joel Jean-François

(56) Documents cités:
- EP-A- 0 502 370
- WO-A-92/18356
- DE-C- 3 413 484
- DE-U- 8 906 071
- FR-A- 2 489 898
- GB-A- 2 004 984

## Description

La présente invention concerne un actionneur à déclenchement pyrotechnique.

Plus particulièrement, l'actionneur selon l'invention peut être utilisé comme générateur d'effort dans des applications automobiles, comme par exemple dans les rétracteurs de sangle de ceinture de sécurité ou autres, dont le fonctionnement est déclenché en cas de choc, pour protéger les occupants d'un véhicule.

Les actionneurs connus dans l'état de la technique sont en général basés sur la libération d'un ressort ou la mise à feu d'un système pyrotechnique, de déplacement d'un organe de poussée ou de traction, par exemple d'un organe d'accrochage de la sangle sur la structure du véhicule, pour tendre celle-ci.

On se reportera par exemple au document DE-U-89 06 071 qui décrit un actionneur conforme au préambule de la revendication 1.

Cependant, ces dispositifs présentent un certain nombre d'inconvénients au niveau de leur sécurité de fonctionnement dans la mesure où ils doivent rester opérationnels pendant des périodes de temps relativement longues.

Par ailleurs, l'utilisation de quantités relativement importantes de matériau pyrotechnique peut également poser des problèmes de sécurité.

Le but de l'invention est donc de résoudre ces problèmes en proposant un actionneur qui soit simple et fiable.

A cet effet, l'invention a pour objet un actionneur à déclenchement pyrotechnique, comportant un cylindre associé à un module de déclenchement pyrotechnique et dans lequel est monté un poussoir d'actionnement déplaçable entre une position escamotée et une position active d'actionnement, lors du déclenchement du module pyrotechnique, caractérisé en ce que le poussoir est maintenu en position escamotée dans le cylindre par une portion d'extrémité de celui-ci, en ce que le poussoir est associé à des moyens de déplacement entre sa position escamotée et sa position active d'actionnement, et en ce que ladite portion d'extrémité du cylindre est reliée au reste de celui-ci par des zones de rupture frangibles sous l'effet d'ondes de choc créées par le module pyrotechnique lors de son déclenchement, ce module ne servant qu'à créer les ondes de choc et non à déplacer le poussoir.

L'invention sera mieux comprise à l'aide de la description qui va suivre, donnée uniquement à titre d'exemple et faite en se référant aux dessins annexés, sur lesquels :

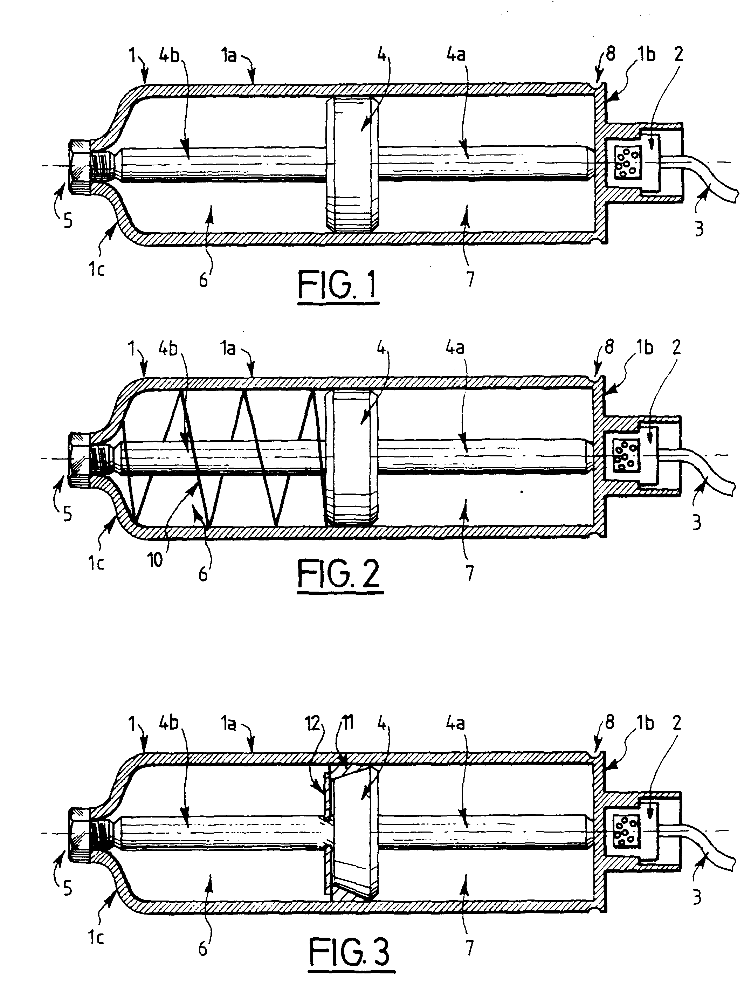

- les Fig.1,2 et 3 représentent des vues en coupe schématique de trois modes de réalisation différents d'un actionneur à déclenchement pyrotechnique selon l'invention.

Sur ces figures, des numéros de référence identiques ont été utilisés pour désigner des éléments analogues.

On peut constater sur ces figures, qu'un actionneur à déclenchement pyrotechnique selon l'invention, comporte un cylindre désigné par la référence générale 1.

Ce cylindre comporte un corps la et des portions d'extrémité 1b et 1c respectivement, ces portions d'extrémité étant par exemple venues de matière avec le corps du cylindre.

Ce cylindre est associé à un module de déclenchement pyrotechnique désigné par la référence générale 2 qui est par exemple associé à la portion d'extrémité 1b du cylindre.

Ce module pyrotechnique est relié par l'intermédiaire de fils d'alimentation 3 au reste des circuits par exemple d'un véhicule automobile.

Un poussoir d'actionnement 4 est disposé dans le cylindre et est monté déplaçable dans celui-ci entre une position escamotée représentée sur ces figures et une position active d'actionnement, lors du déclenchement du module pyrotechnique, comme cela sera décrit plus en détail par la suite.

Des tiges de poussoir respectivement 4a et 4b s'étendent de part et d'autre de celui-ci, les extrémités de ces tiges étant en appui d'une part, sur la portion d'extrémité 1b du cylindre et d'autre part, par exemple sur une vis 5 engagée dans un trou taraudé de la portion d'extrémité lc du cylindre pour immobiliser le poussoir en position escamotée.

Bien entendu, un léger jeu de montage peut être prévu.

Comme cela sera décrit plus en détail par la suite, ce trou taraudé fait également office d'orifice de remplissage du cylindre à l'aide d'un gaz sous pression, la vis 5 permettant de fermer de façon étanche cet orifice.

On notera que le poussoir 4 délimite dans le cylindre deux chambres respectivement 6 et 7.

La portion d'extrémité 1b de cylindre est reliée au reste du corps de celui-ci par l'intermédiaire de zones de rupture 8 constituées par exemple par des zones de concentration de contraintes à section réduite, du matériau constituant le cylindre, ces zones de rupture étant frangibles sous l'effet d'ondes de choc créées par le module pyrotechnique 2 lors de son déclenchement.

Dans un mode de réalisation, les chambres 6 et 7 du cylindre sont remplies de gaz sous pression par l'intermédiaire du trou taraudé 5 et la communication entre les chambres 6 et 7 se fait soit par les jeux entre le poussoir et la paroi interne du cylindre, soit par l'intermédiaire de trous ménagés dans le poussoir.

Une fois ce gaz sous pression introduit dans le cylindre, la vis 5 est serrée en position pour obtenir une fermeture étanche de ce trou taraudé et l'immobilisation en position du poussoir par l'intermédiaire des tiges 4a et 4b entre la vis 5 et la portion d'extrémité 1b du cylindre.

Lors du déclenchement du module pyrotechnique, par exemple par une impulsion électrique engendrée par le reste des circuits du véhicule automobile, lors d'un choc, celui-ci crée des ondes de choc, qui se propagent dans le cylindre.

Ces ondes de choc provoquent la rupture des zones frangibles 8, de sorte que la chambre 7 du cylindre est mise à l'atmosphère brutalement, ce qui provoque un déséquilibre des forces exercées de part et d'autre du poussoir et une libération de celui-ci.

Le gaz contenu dans la chambre 6 du cylindre, peut alors se détendre en provoquant un déplacement du poussoir 4 de sa position escamotée vers sa position active d'actionnement.

On conçoit alors que dans ce mode de réalisation, du gaz sous pression contenu dans les deux chambres du cylindre permet d'équilibrer les forces appliquées de part et d'autre du poussoir 4.

Le poussoir est maintenu en position escamotée par la portion d'extrémité 1b du cylindre, celle-ci étant reliée au reste du cylindre par l'intermédiaire de zones de rupture.

Le déclenchement du module pyrotechnique crée des ondes de choc dans le cylindre, qui provoquent la cassure de ces zones et donc la mise à l'atmosphère de la chambre 7 du cylindre, ce qui permet la libération du poussoir 4 et donc son déplacement vers sa position active d'actionnement sous l'effet de la détente du gaz sous pression dans la chambre 6.

Ce déplacement du poussoir est appliqué à un organe qu'il y a lieu de manoeuvrer, par l'intermédiaire de la portion d'extrémité 1b du cylindre qui peut comporter des moyens d'accouplement de type approprié à cet organe.

Bien entendu, d'autres modes de réalisation peuvent être envisagés et du gaz sous pression peut être introduit uniquement dans la chambre 6 du cylindre dans le cas où une étanchéité est prévue entre la paroi extérieure du poussoir 4 et la paroi intérieure du corps du cylindre.

Il va de soi également que des formes différentes des tiges et du poussoir peuvent être envisagées pour permettre une modulation de la loi de déplacement du poussoir dans le cylindre par régulation du débit de la fuite de gaz de la chambre 7 lors de la rupture des zones 8.

Bien entendu, des moyens élastiques de déplacement du poussoir peuvent également être envisagés, ces moyens élastiques étant constitués par exemple par un ressort comme on peut le voir sur la Fig.2.

Sur cette figure, le ressort est désigné par la référence générale 10 et est par exemple constitué par un ressort hélicoïdal disposé autour de la tige 4a de poussoir.

Dans ce cas également, lors du déclenchement du module pyrotechnique 2, des ondes de choc provoquent la rupture des zones 8, ce qui permet la libération du poussoir à l'intérieur du cylindre, celui-ci étant poussé de sa position escamotée vers sa position active lors de la détente du ressort 10.

Des moyens de blocage en forme de coin peuvent également être utilisés pour empêcher tout déplacement du poussoir dans le cylindre, de sa position active vers sa position escamotée après déclenchement de l'actionneur.

En effet, il existe des applications dans lesquelles il est important que le poussoir ne puisse pas rebondir et se déplacer en sens inverse pour retourner en direction de sa position escamotée.

Ainsi, dans l'actionneur à déclenchement pyrotechnique selon l'invention, le poussoir 4 peut être associé à une bague déformable 11 (Fig.3), les surfaces en regard de cette bague et du poussoir comportant des plans inclinés complémentaires permettant une expansion de la bague déformable contre la paroi interne du corps du cylindre, lors d'un début de déplacement en sens inverse du poussoir en direction de sa position escamotée, pour bloquer ce déplacement.

Cette bague déformable est par exemple constituée par une bague élastique fendue maintenue en position autour du poussoir par l'intermédiaire d'une attache 12 fixée sur la tige 4a de poussoir.

Bien entendu d'autres modes de réalisation de ces moyens de blocage en position du poussoir lors d'un déplacement en sens inverse, peuvent être envisagés.

On conçoit alors que l'actionneur selon l'invention présente une structure extrêmement simple et fiable.

De plus, dans le cas où du gaz sous pression est utilisé, une très bonne étanchéité du cylindre peut être obtenue, ce qui permet à l'actionneur de rester opérationnel pendant des périodes de temps très importantes.

On notera également que la quantité de matériau pyrotechnique utilisée est limitée car celui-ci ne sert qu'à provoquer des ondes de choc et non plus à déplacer le poussoir.

L'actionneur selon l'invention peut être utilisé dans des applications à l'industrie automobile, comme dans les rétracteurs de sangle de ceinture de sécurité ou autres.

## Revendications

1. Actionneur à déclenchement pyrotechnique, comportant un cylindre (1) associé à un module de déclenchement pyrotechnique (2) et dans lequel est monté un poussoir d'actionnement (4) déplaçable entre une position escamotée et une position active d'actionnement, lors du déclenchement du module pyrotechnique (2), caractérisé en ce que le poussoir est maintenu en position escamotée dans le cylindre par une portion d'extrémité (1b) de celui-ci, en ce que le poussoir (4) est associé à des moyens de déplacement entre sa position escamotée et sa position active d'actionnement, et en ce que ladite portion d'extrémité (1b) du cylindre est reliée au reste de celui-ci par des zones de rupture (8) frangibles sous l'effet d'ondes de choc créées par le module pyrotechnique (2) lors de son déclenchement, ce module ne servant qu'à créer les ondes de choc et non à déplacer le poussoir.

2. Actionneur selon la revendication 1, caractérisé en ce que les moyens de déplacement du poussoir dans le cylindre, sont formés par du gaz sous pression contenu dans au moins une chambre (6) de celui-ci.

3. Actionneur selon la revendication 2, caractérisé en ce que du gaz sous pression est contenu dans deux chambres (6,7) délimitées par le poussoir (4) dans le cylindre et dont l'une (7) est mise à l'atmosphère lors de la séparation de la portion d'extrémité (1b) du reste du cylindre consécutivement au déclenchement du module pyrotechnique.

4. Actionneur selon la revendication 1, caractérisé en ce que les moyens de déplacement du poussoir dans le cylindre, comprennent un organe élastique (10) disposé dans une chambre du cylindre.

5. Actionneur selon la revendication 4, caractérisé en ce que l'organe élastique est constitué par un ressort hélicoïdal (10).

6. Actionneur selon l'une quelconque des revendications précédentes, caractérisé en ce qu'il comporte des moyens (11,12) de blocage du déplacement du poussoir (4) en direction de sa position escamotée après déclenchement du module pyrotechnique.

7. Actionneur selon la revendication 6, caractérisé en ce que les moyens de blocage comprennent une bague élastique déformable (11) disposée autour du poussoir (4), les surfaces en regard de cette bague et du poussoir comportant des plans inclinés complémentaires d'expansion de la bague élastique (11) contre la paroi intérieure du cylindre (1) pour empêcher tout déplacement de ce poussoir en direction de sa position escamotée.

8. Actionneur selon l'une quelconque des revendications précédentes, caractérisé en ce qu'il comporte des moyens (4a,4b) d'immobilisation en position escamotée du poussoir.

9. Actionneur selon la revendication 8, caractérisé en ce que les moyens d'immobilisation comprennent des tiges de poussoir (4a,4b) s'étendant de part et d'autre de celui-ci, dont l'une (4a) est en appui sur la portion d'extrémité (1b) de maintien en position escamotée du poussoir dans le cylindre.

## Patentansprüche

1. Betätigungsvorrichtung mit pyrotechnischer Auslösung, bestehend aus einem Zylinder (1), dem ein pyrotechnischer Auslösemodul (2) zugeordnet ist und in dem ein Betätigungsstößel (4) angeordnet ist, der bei der Auslösung des pyrotechnischen Moduls (2) zwischen einer eingezogenen Stellung und einer aktiven Betätigungsstellung beweglich ist, dadurch gekennzeichnet, daß der Stößel in eingezogener Stellung im Zylinder durch einen Endbereich (1b) dieses Zylinders gehalten ist, daß dem Stößel (4) Mittel zu seiner Bewegung zwischen seiner eingezogenen Stellung und seiner aktiven Betätigungsstellung zugeordnet sind und daß dieser Endbereich (1b) des Zylinders mit dem übrigen Zylinder über Bruchzonen (8) verbunden ist, die unter der Einwirkung von durch den pyrotechnischen Modul (2) bei seiner Auslösung erzeugten Stoßwellen durchbrechbar sind, wobei dieser Modul nur zur Erzeugung der Stoßwellen und nicht zur Bewegung des Stößels dient.

2. Betätigungsvorrichtung nach Anspruch 1, dadurch gekennzeichnet, daß die Mittel zur Bewegung des Stößels im Zylinder aus Druckgas bestehen, das in mindestens einer Kammer (6) des Zylinders enthalten ist.

3. Betätigungsvorrichtung nach Anspruch 2, dadurch gekennzeichnet, daß Druckgas in zwei vom Stößel (4) abgegrenzten Kammern (6, 7) enthalten ist, von denen eine (7) bei der auf die Auslösung des pyrotechnischen Moduls folgenden Abtrennung des Endbereichs (1b) vom übrigen Zylinder mit der Atmosphäre verbunden wird.

4. Betätigungsvorrichtung nach Anspruch 1, dadurch gekennzeichnet, daß die Mittel zur Bewegung des Stößels im Zylinder aus einem in einer Kammer des Zylinders angeordneten elastischen Organ (10) bestehen.

5. Betätigungsvorrichtung nach Anspruch 4, dadurch gekennzeichnet, daß das elastische Organ aus einer Schraubenfeder (10) besteht.

6. Betätigungsvorrichtung nach einem der vorhergehenden Ansprüche, dadurch gekennzeichnet, daß sie Einrichtungen (11, 12) zur Blockierung der Bewegung des Stößels (4) in Richtung auf seine eingezogene Stellung nach Auslösung des pyrotechnischen Moduls aufweist.

7. Betätigungsvorrichtung nach Anspruch 6, dadurch gekennzeichnet, daß die Blockiereinrichtungen aus einem den Stößel (4) umgebenden elastischen, verformbaren Ring (11) bestehen, wobei die einander gegenüberstehenden Flächen des Rings und des Stößels ergänzende Schrägflächen zur Dehnung des elastischen Rings (11) auf die Innenwand des Zylinders (1) zu aufweisen, um jede Bewegung dieses Stößels in Richtung auf seine eingezogene Stellung zu verhindern.

8. Betätigungsvorrichtung nach einem der vorhergehenden Ansprüche, dadurch gekennzeichnet, daß sie Einrichtungen (4a, 4b) zur Blockierung des Stößels in eingezogener Stellung aufweist.

9. Betätigungsvorrichtung nach Anspruch 8, dadurch gekennzeichnet, daß die Blockierungseinrichtungen aus Stößelstangen (4a, 4b) bestehen, die sich zu beiden Seiten des Stößels erstrecken und von denen die eine (4a) sich an dem Endbereich (1b) abstützt, der den Stößel im Zylinder in eingezogener Stellung hält.

## Claims

1. Actuator triggered by pyrotechnic means, comprising a cylinder (1) associated with a pyrotechnically triggered module (2) and wherein an actuating push member (4) is mounted which is movable between a retracted position and an active operational position when the pyrotechnic module (2) is triggered, characterised in that the push member is held in the retracted position in the cylinder by an end portion (1b) of the latter, in that the push member (4) is associated with means for displacing it between its retracted position and its active operational position, and in that said end portion (1b) of the cylinder is connected to the remainder thereof by frangible zones (8) which can be broken away under the effect of shock waves produced by the pyrotechnic module (2) as it is triggered, the module serving only to produce the shock waves and not to move the push member.

2. Actuator according to claim 1, characterised in that the means for displacing the push member in the cylinder are formed by pressurised gas contained in at least one chamber (6) of said cylinder.

3. Actuator according to claim 2, characterised in that pressurised gas is contained in two chambers (6, 7) defined by the push member (4) in the cylinder, one (7) of which is connected to atmosphere when the end portion (1b) is separated from the remainder of the cylinder following the triggering of the pyrotechnic module.

4. Actuator according to claim 1, characterised in that the means for displacing the push member in the cylinder comprise a resilient member (10) arranged in one chamber of the cylinder.

5. Actuator according to claim 4, characterised in that the resilient member consists of a helical spring (10).

6. Actuator according to any one of the preceding claims, characterised in that it comprises means (11, 12) for blocking the movement of the push member (4) towards its retracted position after the pyrotechnic module has been triggered.

7. Actuator according to claim 6, characterised in that the blocking means comprise a deformable elastic ring (11) arranged round the push member (4), the facing surfaces of this ring and the push member having complementary inclined planes for expansion of the elastic ring (11) against the inner wall of the cylinder (1) in order to prevent any displacement of this push member towards its retracted position.

8. Actuator according to any one of the preceding claims, characterised in that it comprises means (4a, 4b) for immobilisation in the retracted position of the push member.

9. Actuator according to claim 8, characterised in that the immobilising means comprise push rods (4a, 4b) extending on either side of the push member, one (4a) of which abuts on the end portion (1b) for holding the push member in the retracted position in the cylinder.
